# EUROPEAN PATENT APPLICATION

(11) **EP 2 514 792 A1**
(43) Date of publication of application: **24.10.2012**
(21) Application number: 10837659.1
(22) Date of filing: 16.12.2010
(51) Int. Cl.: C09D 11/00

(54) **AQUEOUS MARKING INK COMPOSITION**

(30) Priority: 17.12.2009 JP 2009286153; 07.12.2010 JP 2010272165
(71) Applicant: Mitsubishi Pencil Company, Limited, Tokyo 140-8537 (JP)
(72) Inventor: IWASA Atsushi, Fujioka-shi Gunma 375-8501 (JP); TOI Yoko, Fujioka-shi Gunma 375-8501 (JP); FUJIWARA Yoshihito, Fujioka-shi Gunma 375-8501 (JP)
(74) Representative: Vossius & Partner
(86) International application number: PCT/JP2010/072663
(87) International publication number: WO 2011/074634

(57) **Abstract**

An aqueous marking ink composition is provided, wherein it has a suitable and good wetting property to a non-absorbing surface of metals, resins and the like stained with oils such as a cutting oil and lubricant, and it can write smoothly thereon at a low viscosity without being repelled to make it possible to obtain drawn lines having a high masking property and a high fixing property; further, it is readily redispersed by a simple stirring operation even when a masking agent settles down after the passage of time, and it is excellent in a masking property and stability; and in particular, it can readily be stirred by using even a stirring member having a small specific gravity. The aqueous marking ink composition is provided with such a constitution that it contains at least 1 to 20 % by mass of a resin which is water-soluble and has a hydrophobic part in a molecule thereof, a colorant containing at least 5 to 30 % by mass of titanium oxide, 0.05 to 2 % by mass of at least one selected from acetylene glycols, acetylene alcohols or derivatives thereof, 1 to 20 % by mass of a water-soluble solvent having a vapor pressure of 5 mmHg or less at 25°C and water.

## Description

### Technical Field

The present invention relates to an aqueous marking ink composition, wherein it has a suitable and good wetting property to a non-absorbing surface of metals, resins and the like stained with oils such as a cutting oil and a lubricant, and it can write smoothly thereon at a low viscosity without being repelled to make it possible to obtain drawn lines having a high masking property and a high fixing property; further, it has a good ink discharge property and is readily redispersed by a simple stirring operation even when a masking agent settles down after the passage of time, and it is excellent in a masking property and stability.

### Background Art

A lot of aqueous marking ink compositions which can provide good drawn lines on a non-absorbing surface of metals, resins and the like without being repelled have so far been known.
In order to provide, for example, a marking ink composition for an oil-adhered metal surface which can satisfy an identification property in a production process since a clear image can be formed on a metal surface adhered with oil and is prevented from being readily peeled off and which is rich in convenience and practicality, known are marking ink compositions for an oil-adhered metal surface which comprise at least a colorant, a resin and at least one solvent selected from alcohols, glycol ethers and esters and in which a dried film comprising 10 parts by weight of the ink composition described above and 1 part by weight of an oil & fat comprising a mineral oil as a principal component has a pencil hardness of 2B or more (refer to, for example, patent documents 1 and 2).

The above marking ink composition for an oil-adhered metal surface has a good fixing property as compared with those of conventional ones but has not yet necessarily exerted a sufficiently high fixing property, and since it contains a large amount of a volatile organic solvent, it involves a problem from the viewpoint of a working environment of the users.

On the other hand, known as compositions having a blend formulation approximate to a composition of the present invention are 1) a correction fluid for photochemical engraving comprising an alkali-neutralized product of a copolymer containing acrylic acid or an alkali-neutralized product of a copolymer containing maleic anhydride, a pigment containing titanium oxide, a solvent of ethanol or ethanol and water and a defoaming agent of an acetylene glycol base or an acetylene alcohol base (refer to, for example, patent documents 2 and 3), 2) an aqueous metallic ink characterized by adding an acetylene alcohol derivative as an additive to an ink principal component comprising a resin, an aluminum paste and water (refer to, for example, patent document 4), 3) an aqueous ink for a ball point pen characterized by adding and containing at least one of 2,4,7,9-tetramethyl-5-decyl-4,7-diol and an ethylene oxide adduct thereof and 3,6-dimethyl-4-octyne-3,6-diol as one component of blend compositions (refer to, for example, patent document 5) and 4) an aqueous ink for a ball point pen comprising 2 % by weight or less of acetylene glycol and/or acetylene alcohol based on the total amount of the ink, a water-soluble organic solvent, a water-soluble dye and water (refer to, for example, patent document 6). In general, it is known that pigment inks are increased in a viscosity by adding acetylene alcohols, acetylene alcohol derivatives to which ethylene oxide is added and the like (refer to, for example, patent document 7).

The formulations of the respective ink compositions described in the patent documents 2 to 6 described above are approximate to the formulation of the present invention, but since the solvent is ethanol or a mixture of ethanol and water in patent documents 2 and 3, the ink compositions involve a problem in terms of being inferior in a fixing property of the drawn lines, and the ink compositions blended with a large amount of ethanol involve a problem in terms of an odor.
Also, in patent document 4, the acetylene alcohol derivative is added in order to prevent pinholes from being generated by mineral spirit contained in the aluminum paste, and in patent documents 5 and 6, acetylene alcohols which are ethylene oxide adducts are added to the inks for an aqueous ink ball point pen to improve a wetting property of ball. The present invention is different from the above patent documents 4 to 6 in the problems, the objects and the technical concept (constitution and action effects thereof) of the invention.

On the other hand, persons having an ordinary skill in the art can estimate that when drawn on a non-absorbing surface (metal surface and the like) stained with oil, an aqueous marking ink is less liable to be repelled by controlling it to a surface tension corresponding to a state of the surface. In general, however, ink compositions can not meet all kinds (surface tension) of oils (stains) without changing a surface tension thereof. It is estimated that if a surface tension of inks is controlled low to the limit, the inks shall not be repelled on any surfaces. On the contrary, however, it is estimated as well that the drawn lines shall be blurred, and the existing state is that it is difficult to obtain good drawn lines.

On the other hand, ink compositions for writing instruments containing titanium oxide which is excellent in a masking power have usually a problem in terms of settling down and separating of titanium oxide with the passage of time because of a high specific gravity thereof. Accordingly, a means of redispersing sufficiently ink compositions before use and then using them, a means of providing ink compositions with a shear thinning viscosity to inhibit titanium oxide from settling down and means obtained by combining them have so far been employed.

In order to provide, for example, an aqueous pigment ink for a center feeder type multicolor marking pen which provides stable handwritings having a high gradation effect even after time passes, known is an aqueous pigment ink for a center feeder type multicolor marking pen which contains water, at least one masking agent selected from titanium oxide, hollow resin particles, flat resin particles, tabular alumina and flaky boron nitride, a colorant, a resin for fixing and at least one thickener selected from polyacrylic acid alkali metal salts, polyacrylic acid organic amine salts and polyols and has a viscosity falling in a range of 3 to 12 mPa·s at a shear rate of 200 s⁻¹ in viscosity measurement at a temperature of 20°C by means of an E type rotation viscometer and which has a TI value falling in a range of 1.2 to 4 defined by (viscosity at a shear rate of 10 s⁻¹)/(viscosity at a shear rate of 200 s⁻¹) and a viscosity of 45 mPa·s or more at a stress of 0.01 Pa and a viscosity of 12 mPa·s or less at a stress of 10 Pa in viscosity measurement under applying a stress at a temperature of 20°C (refer to, for example, patent document 8).
Further, in order to provide an aqueous ink composition for a writing instrument which is free from settling of a material developing a masking power and which reduces a difference in a masking power immediately after writing and after drying handwritings and develops a masking power in handwritings in both states of immediately after writing and after drying handwritings, known is an aqueous ink composition for a writing instrument which is blended with at least water and resin particles and has a masking power, wherein first resin particles having a refractive index of 1.49 to 1.60 and an average particle diameter of 800nm to 2000 nm and second resin particles having a refractive index of 1.49 to 1.60 and an average particle diameter of 300nm to 700 nm are used in combination as the resin particles (refer to, for example, patent document 9).

However, in the aqueous pigment ink described in patent document 8, a viscosity thereof at a high shear rate is low since it is premised to use the pigment ink in a sliver type marker (paragraph 0031), and no consideration is given to settling of the masking agent (titanium oxide). In addition thereto, a problem is involved in the terms that the pigment ink brings about heavy settling down and separation and is inferior in redispersibility. In the above patent document 8, the viscosity is prescribed by viscosity values determined at a shear rate of 200 s⁻¹ and a shear rate of 10 s⁻¹ in the viscosity measurement at a temperature of 20°C by means of an E type rotational viscometer, but if compared with it by a shear rate, the viscosity value of the present invention is higher, and a difference thereof shall be more broadened if measured at a leveled temperature and falls in a range which is not overlapped.

In the aqueous ink composition for a writing instrument shown in patent document 9 described above, settling and separation at issue are decreased, but a problem is involved in the terms that two kinds of the resin particles are still separated after the passage of time over a long period of time, and when written on a metal surface, a problem is involved as well in the terms that shortage of the masking power is undeniable.

### Prior Art Documents

### Patent Documents

Patent document 1: Japanese Patent Application Laid-Open No. 2006-219582 (claims, examples and others)
Patent document 2: Japanese Patent Application Laid-Open Hei 7 No. 92653 (claims, examples 3 to 7 and others)
Patent document 3: Japanese Patent Application Laid-Open Hei 1 No. 79748 (claims, examples and others)
Patent document 4: Japanese Patent Application Laid-Open Hei 1 No. 210478 (claims, examples and others)
Patent document 5: Japanese Patent Application Laid-Open Sho 57 No. 18772 (claims, examples others)
Patent document 6: Japanese Patent Application Laid-Open Sho 57 No. 92068 (claims, examples and others)
Patent document 7: Japanese Patent Application Laid-Open Sho 62 No. 568 (column of Background Art in a left upper column on the second page and others)
Patent document 8: Japanese Patent No. 4118094 (Japanese
Patent Application Laid-Open No. 2004-27081, claims, examples and others)
Patent document 9: Japanese Patent Application Laid-Open No. 2010-53265 (claims, examples and others)

### Outline of the Invention

### Problems to be Solved by the Invention

In light of the problems of the conventional art and the existing situation each described above, the present invention tries to solve them, and an object thereof is to provide an aqueous marking ink composition which has a suitable and good wetting property to a non-absorbing surface of metals, resins and the like stained with oil such as a cutting oil and a lubricant and can write smoothly thereon at a low viscosity without being repelled and which can provide drawn lines having a high masking property and a high fixing property and further provide an aqueous marking ink composition which has a good ink discharge property to make it easy to redisperse the ink by a simple stirring operation even when a masking agent settles down after the passage of time and which is excellent in a masking property and stability.

### Means for Solving the Problems

In light of the problems and the like described above, the present inventors have repeated intense researches to result in paying attentions to an action of a resin which is soluble in water and has a hydrophobic part and coming to the idea that adding the resin having the above characteristics allows oil dirts on a non-absorbing surface to be peeled off and accelerates the drawn lines to be fixed on the non-absorbing surface, and they have studied a formulation thereof, that is, a formulation in which a water-soluble resin having a hydrophobic part is used as a dispersant for a pigment component containing at least titanium oxide for exerting a high masking property to prepare an aqueous ink. Thus, it has become clear that the above resin acts as a dispersant for the pigment and does not exert a large influence on a surface tension of the ink when the ink is not used and that when it is written on a non-absorbing surface stained with oil, the action effect described above is exerted. In the above case, however, when water or a solvent having a faster drying speed than that of water (for example, an aqueous solution having an ethanol concentration of exceeding 20 % and the like) is used as a solvent for the ink, the drawn lines are dried before the above action is exerted to result in that the drawn lines are inferior in a fixing property.

Accordingly, a solvent having slow drying (water-soluble solvent having a vapor pressure of 5 mmHg or less at 25°C) which is considered usually to delay a drying speed to reduce a fixing property has been added to prepare an aqueous ink and study it to result in finding that while an apparent drying time is not distinctly delayed, the drawn lines have been increased in a fixing property. This is estimated to be attributable to that time for completing the action described above is extended by adding the solvent having slow drying to result in rather enhancing the fixing property. Further, it is estimated that since the solvent having slow drying is introduced into a hydrophilic part (group) of the above resin, the drying time is not apparently distinctly delayed.
Further, it has been found that when a specific component is further added in order to accelerate an action of the resin described above which is soluble in water and has a hydrophobic part, it aids and accelerates an action of peeling off oil dirts on the non-absorbing surface described above and in addition thereto, it plays a role of controlling a surface tension of the ink composition. It has become clear from descriptions in patent document 5 described above that the above component can be blended without bringing about (unexpectedly) a marked increase in the viscosity even when acetylene alcohols and acetylene glycols which are estimated to elevate the viscosity are added.
It has been found that also in a composition containing a large amount of a pigment component due to requiring a high masking property as an industrial marker, the above composition is controlled totally to a low viscosity and can smoothly write and that it does not bring about "cissing" and provides a high fixing property, and it has been found as well that the composition is provided with a good ink discharge property by using in combination a specific masking agent which is different in a specific gravity from titanium oxide to make it easy to redisperse the ink by a simple stirring operation even when the masking agent settles down after the passage of time and that it is excellent in a masking property and stability. Thus, the present invention has been completed.

That is, the present invention comprises the following items (1) to (7).
(1) An aqueous marking ink composition containing at least 1 to 20 % by mass of a resin which is water-soluble and has a hydrophobic part in a molecule thereof, a colorant containing at least 5 to 30 % by mass of titanium oxide, 0.05 to 2 % by mass of at least one selected from acetylene glycols, acetylene alcohols or derivatives thereof, 1 to 20 % by mass of a water-soluble solvent having a vapor pressure of 5 mmHg or less at 25°C and water.
(2) The aqueous marking ink composition as described in the above item (1), wherein it further contains, in addition to titanium oxide described above, a second masking agent having a specific gravity which is different from that of titanium oxide; the second masking agent is glass particles, metal particles, resin particles, hollow resin particles, calcium carbonate particles, boron nitride particles, wax particles and composite particles thereof or a dispersion of the above particles; a particle diameter of the second masking agent is 40 nm to 50000 nm; and a content of the second masking agent is 2 to 20 % by mass in terms of a solid content.
(3) The aqueous marking ink composition as described in the above item (1) or (2), wherein values of a viscosity of the aqueous marking ink composition which are measured at 25°C by means of an ELD type rotational viscometer at the following shear rates fall respectively in the following ranges:

| shear rate (s⁻¹) | viscosity (mPa·s) |
|---|---|
| 9.58 | 40 to 75 |
| 19.15 | 20 to 50 |
| 38.3 | 15 to 35 |
| 191.5 | 12 to 22 |
| 383 | 10 to 18 |

(4) The aqueous marking ink composition as described in any one of the above items (1) to (3), wherein the resin which is water-soluble and has a hydrophobic part in a molecule thereof is at least one selected from water-soluble acryl resins, water-soluble maleic acid resins, water-soluble styrene resins, water-soluble styrene-acryl resins, water-soluble styrene-maleic acid resins, polyvinylpyrrolidone, polyvinyl alcohol, water-soluble ester-acryl resins, ethylene-maleic acid copolymers, polyethylene oxide, water-soluble urethane resins, acryl base emulsions, vinyl acetate base emulsions, urethane base emulsions, styrene-acrylonitrile emulsions, styrene-butadiene emulsions and silicone emulsions.
(5) The aqueous marking ink composition as described in any one of the above items (1) to (4), wherein at least one selected from acetylene glycols, acetylene alcohols or derivatives thereof is a compound represented by the following Formulas (I) to (IV): 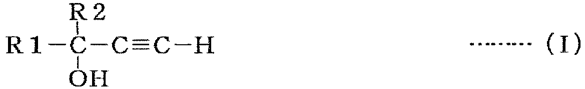 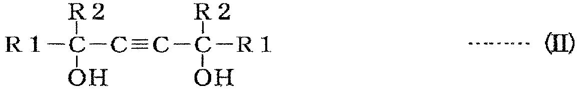 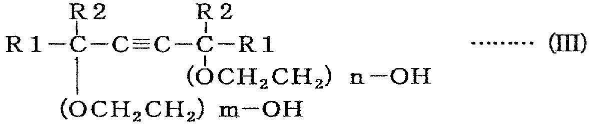 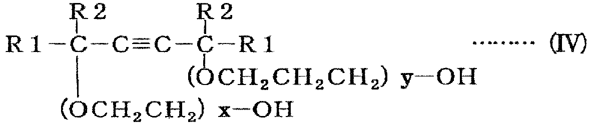 (R1 and R2 in Formulas (I) to (IV) described above each are a linear or branched alkyl group having 1 to 8 carbon atoms, and m, n, x and y are integers of 1 to 100).
(6) The aqueous marking ink composition as described in any one of the above items (1) to (5), wherein the water-soluble solvent having a vapor pressure of 5 mmHg or less at 25°C is at least one selected from 2-methyl-1-butanol, 3-methyl-2-butanol, benzyl alcohol, cyclohexanol, propylene glycol, ethylene glycol, diethylene glycol, trimethylene glycol, 1,2-butanediol, 1,3-butanediol, tetramethylene glycol, 2,3-butanediol, pentamethylene glycol, 2-butene-1,4-diol, hexylene glycol, octylene glycol, glycerin, hexaglycerol, 1,2,6-hexanetriol, butyl cellosolve, isoamyl cellosolve, hexyl cellosolve, phenyl cellosolve, furfuryl alcohol, tetrahydrofurfuryl alcohol, methyl carbitol, ethyl carbitol, butyl carbitol, triethylene glycol, triethylene glycol monomethyl ether, tetraethylene glycol, polyethylene glycol, dipropylene glycol, dipropylene glycol monomethyl ether, dipropylene glycol monoethyl ether, polypropylene glycol, diacetone alcohol, methyl cellosolve acetate, ethyl cellosolve acetate, carbitol acetate and butyl carbitol acetate.
(7) The aqueous marking ink composition as described in any of the above items (1) to (6), wherein it is filled into a valve type writing instrument having a stirring member.

### Effect of the Invention

According to the present invention, provided is an aqueous marking ink composition which has a suitable and good wetting property to a non-absorbing surface of metals, resins and the like stained with oil such as a cutting oil and lubricant and can write smoothly thereon at a low viscosity without being repelled and which can provide drawn lines having a high masking property and a high fixing property.
Further, an aqueous marking ink composition which has a good ink discharge property to make it easy to redisperse the ink by a simple stirring operation even when a masking agent settles down after the passage of time and which is excellent in a masking property and stability is provided by using in combination the second masking agent described in claim 2 which has a specific gravity different from that of titanium oxide.

### Brief Explanation of the Drawings

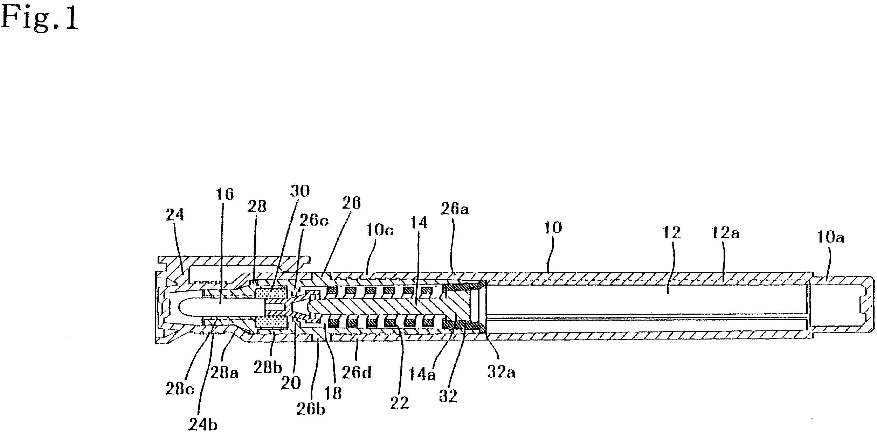

Fig. 1 is a vertical cross-sectional drawing showing one example of a writing instrument filled with the aqueous ink composition of the present invention for a writing instrument.

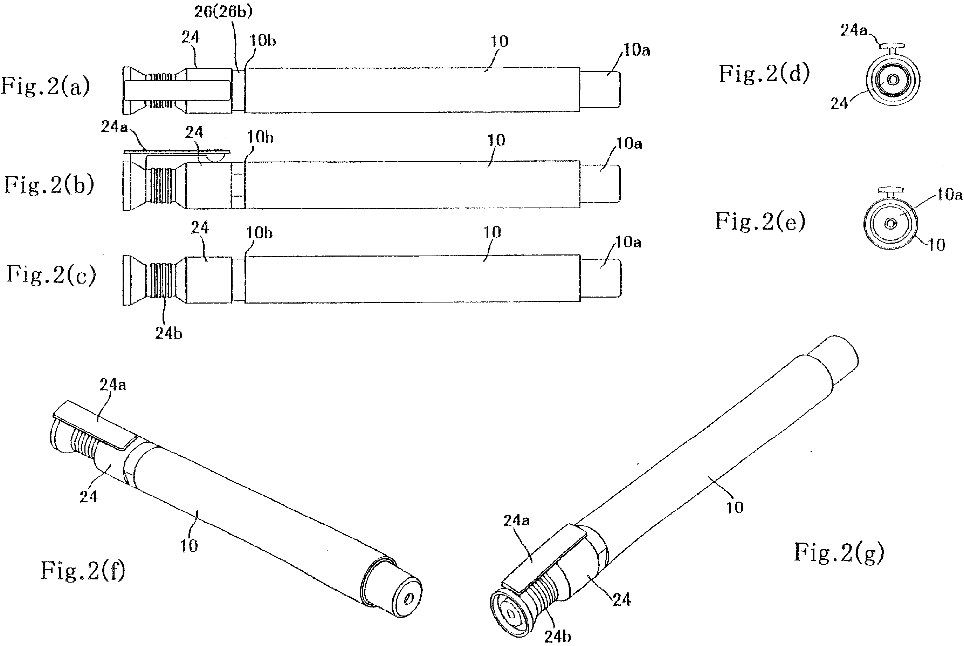

Fig. 2 is a whole explanatory drawing of the writing instrument shown in Fig. 1, wherein (a) is one side view; (b) is a different side view obtained by rotating the above one side view by 90°; (c) is another side view obtained by rotating the different side view by 90°; (d) is a drawing obtained by observing the tip from a cap side in a barrel direction; (e) is a drawing obtained by observing the instrument from a rear end in a barrel direction; (f) is a rear perspective drawing; and (g) is a front perspective drawing.

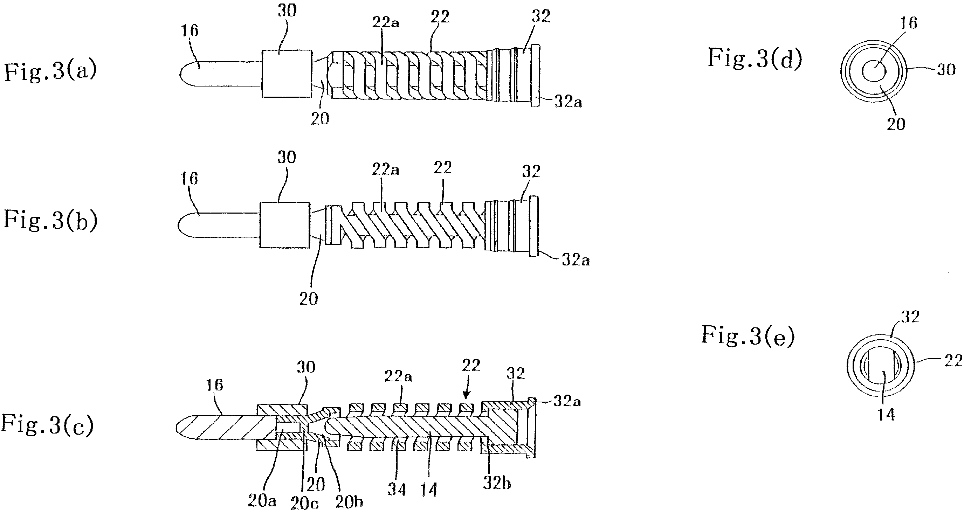

Fig. 3 is an explanatory drawing of a device obtained by mounting a pen body (coating body) which is a pen tip and a sponge body on a spring body prepared by integrally molding a valve body which is a valve member on a tip, wherein (a) is one side view; (b) is a different side view; (c) is a vertical cross-sectional drawing; (d) is a drawing obtained by observing the instrument from a front side in a barrel direction; and (e) is a drawing obtained by observing the instrument from a rear side in a barrel direction

### Mode for Carrying Out the Invention

The embodiment of the present invention shall be explained below in detail.
The aqueous marking ink composition of the present invention is characterized by containing at least 1 to 20 % by mass of a resin which is water-soluble and has a hydrophobic part in a molecule thereof, a colorant containing at least 5 to 30 % by mass of titanium oxide, 0.05 to 2 % by mass of at least one selected from acetylene glycols, acetylene alcohols or derivatives thereof, 1 to 20 % by mass of a water-soluble solvent having a vapor pressure of 5 mmHg or less at 25°C and water.

The resin which is water-soluble and has a hydrophobic part in a molecule thereof used in the present invention acts as a dispersant for the pigment such as titanium oxide used in the ink composition, and when written (coated) on a non-absorbing surface stained with oil, it has the functions that it peels off oil dirts on the non-absorbing surface without exerting a large influence on a surface tension of the ink and that it accelerates the drawn lines to be fixed on the non-absorbing surface.
The resin which can be used and which is water-soluble and has a hydrophobic part in a molecule thereof includes water-soluble acrylic acid resins, water-soluble maleic acid resins, water-soluble styrene resins, water-soluble styrene-acryl resins, water-soluble styrene-maleic acid resins, polyvinylpyrrolidone, polyvinyl alcohol, water-soluble ester-acryl resins, ethylene-maleic acid copolymers, polyethylene oxide, water-soluble urethane resins and the like. Further, the resin emulsion includes, for example, acryl base emulsions, vinyl acetate base emulsions, urethane base emulsions, styrene-butadiene emulsions, styrene acrylonitrile emulsions and the like. The emulsion comprising oil-soluble silicone includes emulsions containing at least one selected from dimethylsilicone, monomethylsilicone, phenylmethylsilicone, alkyl-modified silicone and amino-modified silicone. The above resins can be used alone or in a mixture of two or more kinds thereof.
Capable of being listed as commercially available products are acrylic acid resins such as a JONCRYL 6102B aqueous solution, styrene acryl resins such as a JONCRYL 62J aqueous solution and a JONCRYL J678 aqueous solution, styrene acryl emulsions such as a JONCRYL 711 emulsion (all manufactured by BASF A.G.), styrene maleic acid resins such as an SMA1440 aqueous solution (manufactured by Kawahara Petrochemical Co., Ltd.), urethane resins such as a Hydran WLA-404 aqueous solution (manufactured by Dainippon Ink & Chemicals Inc.), urethane resin emulsions such as a UCOAT UX-150 emulsion (manufactured by Sanyo Chemical Industries, Ltd.) and WBR-016U (manufactured by Taisei Fine Chemical Co., Ltd.), urethane UREARNO resin such as a W321 emulsion (manufactured by Arakawa Chemical Industries, Ltd.), silicone resins such as a SILICOLEASE 902 emulsion (manufactured by Arakawa Chemical Industries, Ltd.) and an acryl silicone 3DR-057 aqueous solution (manufactured by Taisei Fine Chemical Co., Ltd.) and silicone emulsions such as trade names SH7036, SH8710, SH8701, SH8705, SH8722 and SH8707 each manufactured by Dow Corning Toray Co., Ltd..
The aqueous solution types are preferably used in terms of dispersion of pigments such as titanium oxide. On the other hand, the emulsion types are preferably used in terms of controlling the viscosity and elevating the fixing power, and the above types are used more preferably in combination.

A content of the above resins (water-soluble resins and/or resins emulsions) which are water-soluble and have a hydrophobic part in a molecule thereof is 1 to 20 %, preferably 5 to 20 % based on the total amount (100 % by mass; hereinafter "% by mass" shall be referred to merely as "%") of the ink composition.
If a content of the above resins is less than 1 %, it is difficult to satisfy both of dispersion of the pigment and fixing onto a non-absorbing surface, and on the other hand, if it exceeds 20 %, the viscosity grows high to deteriorate the followability.
When the emulsion resins among the above resins are used alone or in combination, a content (solid content) thereof is controlled to the ranges described above, and it is particularly preferably 1 to 10 % in terms of fixing stabilization (inhibition of peeling and erasing brought about by destabilization) and stabilization (inhibition of gelation) of the ink composition.

The colorant used in the present invention contains at least 5 to 30 %, preferably 10 to 25 % of titanium oxide in the ink composition. Titanium oxide is contained as a masking agent which exerts a masking property on a non-absorbing surface such as metal surface stained with oil, and various ones used for marking inks can be used. Titanium oxides of a rutile type and an anatase type each having a primary particle diameter of 0.1 to 1.0 µm can preferably be used, and titanium oxides of a rutile type are more preferably used. To be specific, CR-58 and R-980 (all manufacture by Ishihara Sangyo Co., Ltd.), TR-600 and TR-840 (manufacture by Fuji Titanium Industry Co., Ltd.) and the like which are commercially available can be used.
If a content of the above titanium oxides is less than 5 %, the masking property on a non-absorbing surface is weak, and the targeted effect can not be exerted. On the other hand, if it exceeds 30 %, the viscosity grows high to deteriorate the followability.

In the present invention, a second masking agent in addition to titanium oxide described above can be contained as the more preferred embodiment. Capable of being listed as the second masking agent which can be used are, for example, glass particles, metal particles, resin particles, hollow resin particles, calcium carbonate particles, boron nitride particles, wax particles and composite particles thereof or dispersions of the above particles. In the above second masking agents, the hollow resin particles include, to be specific, styrene·acryl base particles such as Ropaque OP-84J, Ropaque HP-91, Ropaque Ultra (manufacture by Rohm & Haas Company) and the like, and the resin particles include melamine particles (for example, EPOSTAR, manufacture by Nippon Shokubai Co., Ltd.), nylon particles (for example, Orgasol, manufacture by Arkema K.K.), benzoguanamine particles (for example, EPOCOLOR, manufacture by Nippon Shokubai Co., Ltd.) and the like. The composite particles include titanated mica (for example, Iriodin 111, manufacture by Merck AG.) and the like, and the boron nitride particles include, for example, boron nitride powder manufacture by Mizushima Ferroalloy Co., Ltd. and the like. The dispersions include, for example, aqueous dispersions of the respective particles described above.
In particular, the hollow resin particles are preferably used in terms of more masking power and more dispersion stability.
Also, the second masking agent described above has a particle diameter of 40 nm to 50000 nm, more preferably 100 nm to 2000 nm in terms of a masking power and a settling speed.
The second masking agent described above has a small specific gravity as compared with that of titanium oxide, and when it is used in combination therewith, it is further improved in a masking power and redispersibility.
When the above second masking agent is used, a content thereof is 2 to 20 % (7 to 50 % in terms of a solid total in using in combination with titanium oxide), preferably 2 to 10 % (7 to 35 % in terms of a solid total) based on the total amount of the ink composition in terms of enhancing further a masking power and redispersibility.

Colorants which can be used other than titanium oxide described above include, for example, inorganic pigments such as carbon black, zinc oxide, red iron oxide, chromium oxide, iron black, cobalt blue, alumina white, iron oxide yellow, viridian, zinc sulfide, lithopone, cadmium yellow, vermilion, cadmium red, chrome yellow, molybdate orange, zinc chromate, strontium chromate, white carbon, clay, talc, ultramarine blue, precipitated barium sulfate, barite powder, calcium carbonate, lead white, iron blue, manganese violet, aluminum powder, brass powder and the like and organic pigments such as azo lake, insoluble azo pigments, chelate azo pigments, phthalocyanine pigments, perylene and perylene pigments, anthraquinone pigments, quinacridone pigments, dye lake nitro pigments, nitroso pigments and the like.
Further, capable of being used as well are dyes such as acid dyes, reactive dyes, basic dyes, disperse dyes, direct dyes, fluorescent dyes, C.I. basic yellow 35, C.I. basic yellow 40, C.I. acid orange 28, C.I. acid blue 92 and the like and in addition thereto, processed pigments having surfaces modified with other resins, surfactants and the like and colorants obtained by coloring dispersion toners, acryl base resins, benzoguanamine resins and the like by pigments and dyes and micronizing them.
The above colorants can be used alone or in combination of two or more kinds thereof.

In the above colorants other than titanium oxide, various colorants can be used, if necessary, according to the targets for marking, the colors of the non-absorbing surfaces and the like, and a content of the colorants containing no titanium oxide is 0 to 10 %, preferably 2 to 8 % based on the total amount of the ink composition.

The acetylene alcohols, the acetylene glycols or the derivatives thereof which are used in the present invention are used in order to accelerate the action of the resin which is water-soluble and has a hydrophobic part, and they have a role of aiding and accelerating the action of peeling off oil dirts on a non-absorbing surface such as a metal surface and in addition thereto, play a role of controlling a surface tension of the ink composition. In general, when the above acetylene alcohols, acetylene glycols and the like are contained, it is anticipated that the viscosity grows high. In the present invention, however, suitably combining the acetylene alcohols, the acetylene glycols and the like with the respective essential components of the present invention in the ranges of the fixed contents results in making it possible to exert the action effects described above without bringing about a marked increase in the viscosity.
The acetylene alcohols, the acetylene glycols or the derivatives thereof which can be used include, for example, acetylene alcohols represented by the following Formula (I), acetylene glycols represented by the following Formula (II), derivatives (adducts) represented by the following Formula (III) which are obtained by adding ethylene oxide (EO) to acetylene glycols and derivatives (adducts) represented by the following Formula (IV) which are obtained by adding ethylene oxide (EO) and propylene oxide (PO) to acetylene glycols: 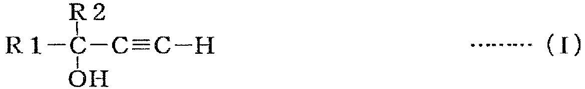 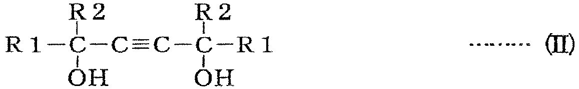 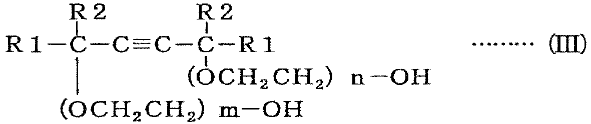 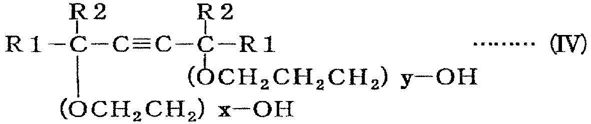 (R1 and R2 in Formulas (I) to (IV) described above each are a linear or branched alkyl group having 1 to 8 carbon atoms, and m, n, x and y are integers of 1 to 100).

Capable of being listed are, to be specific, EO (40 mole) adducts, ethylene oxide EO (65 mole) adducts, ethylene oxide EO (85 mole) adducts, EO (5 mole) + PO (2 mole) adducts of 3-methyl-1-butyne-3-ol [CH₃C (CH₃) (OH) CCH], 3-methyl-1-pentyne-3-ol [CH₃CH₂C (CH₃) (OH)CCH], 3,6-dimethyl-4-octyne-3,6-diol [CH₃CH₂C (CH₃) (OH) CC (CH₃)], 2,4,7,9-tetramethyl-5-decyne-4,7-diol [(CH₃) ₂CH-CH₂C (CH₃) (OH) CCC (CH₃) (OH)CH₂CH(CH₃)], 3,5-dimethyl-1-hexyne-3-ol [(CH₃)₂CHCH₂C (CH₃) (OH) CCH] and 2,5-dimethyl-3-hexyne-2,5-diol [CH₃C (CH₃) (OH) CCC (CH₃) (OH) CH₃] and self-emulsification type acetylenediol. They can be used alone or in combination of two or more kinds thereof.
Capable of being Listed as commercially available products are Surfynol 485 [EO (85 mole) adduct of 2,4,7,9-tetramethyl-5-decyne-4,7-diol (commercially available product: Surfynol 104)], Surfynol PSA-336 (polyethoxylate of 2, 4, 7, 9-tetramethyl-5-decyne-4,7-diol), Surfynol 2502 (EO (5 mole) + PO (2 mole) adduct of 2,4,7,9-tetramethyl-5-decyne-4,7-diol), Surfynol 82 (acetylenediol), Olfine E1010 [EO (10 mole) adduct of 2,4,7,9-tetramethyl-5-decyne-4,7-diol], Olfine WE-003 (blended product of acetylenediol), Olfine EXP.4200 (blended product of acetylenediol) and the like.
Further, derivatives (adducts) obtained by adding propylene oxide (PO) to the acetylene glycols represented by Formula (III) described above can be used as well.
The derivatives obtained by adding (EO) and (PO), the blended products of acetylenediol and the like are preferably used in terms of solubility in water.

A content of the above acetylene glycols, acetylene alcohols or derivatives thereof is 0.05 to 5 %, preferably 0.1 to 2 % based on the total amount of the ink composition.
If a content of the above resin is less than 0.05 %, the action of aiding and accelerating further the action of the resin which is water-soluble and has a hydrophobic part is weakened, and the actions of peeling off oil dirts on a non-absorbing surface such as a metal surface and controlling a surface tension of the ink composition become unsatisfactory, so that the effects of the present invention can not be exerted. On the other hand, if it exceeds 5 %, stability of the ink is deteriorated, and both are not preferred.

The water-soluble solvent having a vapor pressure of 5 mmHg or less at 25°C which is used in the present invention suitably delays a drying speed of lines written (coated) on a non-absorbing surface of metals and resins stained with oil such as a cutting oil and lubricant to improve a fixing property thereof.
Capable of being listed as the water-soluble solvent having the characteristic described above which can be used are, for example, alcohols such as 2-methyl-1-butanol, 3-methyl-2-butanol, benzyl alcohol, cyclohexanol and the like, glycols such as propylene glycol, ethylene glycol, diethylene glycol, trimethylene glycol, 1,2-butanediol, 1,3-butanediol, tetramethylene glycol, 2,3-butanediol, pentamethylene glycol, 2-butene-1,4-diol, hexylene glycol, octylene glycol, glycerin, hexaglycerol and 1,2,6-hexanetriol, alcohol ethers, such as butyl cellosolve, isoamyl cellosolve, hexyl cellosolve, phenyl cellosolve, furfuryl alcohol, tetrahydrofurfuryl alcohol, methyl carbitol, ethyl carbitol, butyl carbitol, triethylene glycol, triethylene glycol monomethyl ether, tetraethylene glycol, polyethylene glycol, dipropylene glycol, dipropylene glycol monomethyl ether, dipropylene glycol monoethyl ether, polypropylene glycol, diacetone alcohol, methyl cellosolve acetate, ethyl cellosolve acetate, carbitol acetate and butyl carbitol acetate. They can be used alone or in combination of two or more kinds thereof.
The glycols or the alcohol ethers are preferably used in terms of a solubility in water.

A content of the above water-soluble solvents having the characteristic described above is 1 to 20 %, preferably 2 to 10 % based on the total amount of the ink composition.
If a content of the above water-soluble solvents is less than 1 %, the actions of peeling off oil dirts on a non-absorbing surface such as a metal surface and controlling a surface tension of the ink composition become unsatisfactory, so that the effects of the present invention can not be exerted. On the other hand, if it exceeds 20 %, the drawn lines are delayed in a drying property and reduced in a fixing property, so that both are not preferred.
If used is the water-soluble solvent having a vapor pressure of 5 mmHg or less at 25°C, for example, water or a solvent having a faster drying speed than that of water (purified ethanol, an aqueous solution of ethanol having a concentration of exceeding 20 %, an aqueous solution of propanol having a concentration of exceeding 20 % and the like), the drawn lines are dried before exerted are the actions (the actions of peeling off oil dirts on a non-absorbing surface and accelerating fixation of the drawn lines onto a non-absorbing surface) of the resin which is water-soluble and has a hydrophobic part described above, and it results in bringing about reduction in a fixing property of the drawn lines onto a non-absorbing surface and making it impossible to exert the effects of the present invention (this matter shall be further explained in examples and others described later). Accordingly, the above water-soluble solvent is not allowed to be added to the solvent in excess of 20 %.

The aqueous marking ink composition of the present invention contains preferably a pH controlling agent (neutralizing the ink composition) in addition to the respective components described above in order to further enhance solubility of the resin which is water-soluble and has a hydrophobic part in a molecule thereof, for example, a styrene acryl resin, a styrene maleic acid resin, an acrylic acid resin and the like.
The pH controlling agent which can be used includes ammonia, urea, monoethanolamine, diethanolamine, triethanolamine, alkali metal salts of carbonic acid and phosphoric acid such as sodium tripolyphosphate, sodium carbonate and hydrates of alkali metals such as sodium hydroxide. They can be used alone or in combination of two or more kinds thereof.
A content of the above pH controlling agents is varied according to a content of the resin which is water-soluble and has a hydrophobic part in a molecule thereof, and it is 0.05 to 2 %, preferably 0.1 to 1 % based on the total amount of the ink composition.

In the present invention, a thickener may be contained in the ink composition in terms of appropriate discharge and reduction of pigment settling. Alkali thickening type thickeners, cross-linking type thickeners, inorganic thickeners and the like in addition to polysaccharides can be used as the thickener which can be used. The polysaccharides include, for example, gums such as xanthan gum, rheozan gum and gellan gum. A content thereof is preferably 1 % or less, more preferably 0.01 to 0.5 % and further preferably 0.01 to 0.3 % based on the total amount of the ink composition.
Further, the aqueous marking ink composition of the present invention can contain suitably, if necessary, optional components such as a fungicide and a rust preventive in addition to the respective components described above.
The aqueous marking ink composition of the present invention can be produced by mixing the respective essential components described above (the balance is controlled by water (purified water, ion-exchanged water, distilled water and the like)) according to an ordinary method by means of a ball mill, a homomixer, a bead mill, a three roll mill or the like.

Values of a viscosity of the resulting aqueous marking ink composition of the present invention for a writing instrument which are measured at 25°C by means of an ELD type rotational viscometer at the following shear rates are preferably set to the following ranges respectively in terms of a discharge property of the ink, settling prevention of the masking agent, redispersibility of the components by stirring and the like even if settled down and an aging stability thereof:

| shear rate (s⁻¹) | viscosity (mPa·s) |
|---|---|
| 9.58 | 40 to 75 |
| 19.15 | 20 to 50 |
| 38.3 | 15 to 35 |
| 191.5 | 12 to 22 |
| 383 | 10 to 18 |

If the respective viscosities (mPa·s) at the above respective shear rates (s⁻¹) are less than the respective numerical values (40 mPa·s, 20 mPa·s, 15 mPa·s, 12 mPa·s and 10 mPa·s), the redispersibility is deteriorated. On the other hand, if the respective viscosities (mPa·s) exceed the respective numerical values (75 mPa·s, 50 mPa·s, 35 mPa·s, 22 mPa·s and 18 mPa·s), the viscosity grows high, and the followability is deteriorated, that is, a discharge amount of the ink is reduced to cause starving, so that it is not preferred.

In addition to satisfying the above viscosity ranges at the shear rates described above, the values of the viscosity which are measured at the following shear rates fall more preferably in the following ranges in terms of the redispersibility and the ink discharge amount:

| shear rate (s⁻¹) | viscosity (mPa·s) |
|---|---|
| 3.83 | 70 to 120 |
| 76.6 | 13 to 25 |

The values of the viscosity at the shear rates described above can be controlled and allowed to fall in the above ranges by suitably combining the kind, the characteristic (specific gravity) and a content of titanium oxide (the second masking agent when the second masking agent is used), the kind and a content of the water-soluble resin and the kind and a content of the thickener.

The aqueous marking ink composition of the present invention for a writing instrument thus obtained is held in, for example, a marking pen (writing instrument) of a valve mechanism equipped with a pen tip having a capillary action, and then it is used.

The aqueous marking ink composition of the present invention thus constituted has a suitable and good wetting property to a non-absorbing surface of metals, resins and the like stained with oil such as a cutting oil and lubricant and can write smoothly thereon at a low viscosity without being repelled, and it can provide drawn lines having a high masking property and a high fixing property.
Further, the aqueous marking ink composition of the present invention has a good ink discharge property and is readily redispersed by a simple stirring operation even when the masking agent settles down after the passage of time, and it is excellent in a masking property and stability. When it is used for a writing instrument of a marking pen type equipped with a stirring member and a valve mechanism in a tank, it is readily redispersed by a simple stirring operation even when the masking agent settles down after the passage of time. In particular, obtained is an aqueous marking ink composition which can readily be stirred as well by using a stirring member having a smaller specific gravity than that of the masking agent or the pigment, for example, a stirring member constituted from 50 % or more of a resin in terms of a volume ratio without using a metal-made stirring member and the like having a larger specific gravity than that of the masking agent or the pigment.
Particular when used in combination is the second masking agent having the characteristics described above in which a specific gravity is different from that of titanium oxide, the ink composition has a better ink discharge property and is more readily redispersed by a simple stirring operation even when the masking agent settles down after the passage of time, and it is more excellent in a masking property and stability.

A form, a size, a weight and the like of the stirring member are varied according to the structure and the like of the writing instrument, and the form includes various forms such as, for example, a cylindrical form, a spherical form (ball form), an ellipsoid form, a bar form, a cross-sectional T form, a cigar form, a form in which a high specific gravity matter such as a metal material is provided in a core part of a cross-sectional bar form, a cross-sectional form of reference numeral 14 shown in Fig. 1 described later and the like, and in addition thereto, it includes a triangular prism form, a solid square pole such as a quadrangular prism form, a rectangular prism form, a cubic form, a star form and the like. A size of the stirring member may be a size which can be held in the writing instrument and in which the masking agent having a settling property can efficiently be stirred. Also, a weight of the stirring member is preferably 1 to 10, more preferably 1 to 6 in terms of a specific gravity based on a specific gravity of the ink composition (for example, about 1.2 in a case of the ink composition of the present invention).

Fig. 1 to Fig. 3 show one example of a marking pen (writing instrument) filled with the aqueous marking ink composition of the present invention, and it is a writing instrument having a valve mechanism in which a valve body in the valve mechanism is opened by pushing a pen body (coating body) in a pen tip against an elastic force of a spring body to introduce the aqueous ink composition of the present invention for a writing instrument into the pen body described above, wherein it has a form in which a stirring member 14 comprising a material being not corroded by the ink composition can get into the valve in stirring.
As shown in Fig.1, in the above writing instrument, a tank 12 for storing the aqueous marking ink composition of the present invention in a rear part of a barrel 10 is communicated with a front part of the barrel 10 in an inside, and a stirring member 14 is mounted in an inside of the above tank 12; a coating body 16 staying in a state in which a tip thereof is protruded, a valve body 20 for opening and shutting an ink discharge channel 18 and a spring body 22 for pushing forward the above valve body 20 by an elastic force are provided internally in a front part of the barrel 10 described above; the valve body 20 is opened against an elastic force of the spring body 22 by pushing the coating body 16 in the pen tip to introduce the ink into the coating body 16 described above, and this makes it possible to coat (write) the ink on a targeted material. The stirring member 14 in the present embodiment is constituted of a polyacetal resin (POM, specific gravity: 1.4).

In the marking pen of the above embodiment, a rear part of the barrel 10 in which a rear end part is closed is, as shown in Fig. 1 to Fig. 2, the tank 12 for holding the aqueous marking ink composition of the present invention in an inside space thereof, and a rear end part 10a is stepwise decreased in a diameter to form an outer diameter in which a cap 24 can be externally fitted therewith. An approximately hollow tubular front holder 26 is fitted in a front end part of the above barrel 10. A rear end (fitted front end) 26a of the front holder 26 reaches the vicinity of a central part of the barrel 10, and plural ribs 12a are formed in the form of projections on an inside face of the tank 12 in the barrel 10 from a rear end to the vicinity of a central part along a barrel direction.
In the front holder 26 described above, a flange 26b is formed on an outer circumference of a central part thereof, and the above flange 26b is brought into contact with a front end part 10b of the barrel 10 to position the front holder so that it does not get any more into the barrel 10. Also, a valve retainer 26c is formed in the form of a projection circularly toward an inside in an inner circumference of a front part of the front holder 26, so that the above valve retainer 26c is brought into contact with and released from an outer circumference of the valve body 20 described above. A male screw 26d is formed in an outer circumferential face part of a backside of the flange 26b in the front holder 26, and the above male screw 26d is screwed into a female screw 10c in an inner circumferential face part of the barrel 10 in a corresponding portion and fixed so that the front holder 26 does not come off from the barrel 10. Also, flat notches corresponding to a tool such as a spanner are formed at an interval of 180° in an outer circumferential face of the flange 26b, and the above notches are nipped by the tool to rotate the front holder 26 toward the barrel 10, whereby the front holder can be detached from the barrel 10 to refill the ink into the tank 12. That is, it can be reused. It is a matter of course that a cartridge system in which the tank 12 is separatedly detachable from the barrel 10 can be employed.

A rear part 28b of a mouth ring 28 in which the coating body 16 is movably mounted and which is a holding part of the coating body 16 is inserted into a front end part of the front holder 26. Ribs 28c for movably guiding the coating body 16 are formed on an inner circumferential face of a front part 28a of the above mouth ring 28. The front part 28a of the mouth ring 28 is formed in a smaller diameter than that of the rear part 28b so as to fit the coating body 16, and an outer diameter of the central part is protruded in a flange form and brought into contact with a tip of the front holder 26 so that the rear part 28b does not get any more into the front holder 26. A sponge 30 is internally mounted in the rear part 28b of the mouth ring 28 surrounding a rear part of the coating body 16 and an outer circumference of the valve body 20. The sponge 30 is positioned at a front side of the valve retainer 26c and has a function to retain once the coating liquid therein and control it so as to discharge stably into the coating body 16 in order to prevent the coating liquid flowing into a coating liquid discharge channel from rapidly flowing in the coating body 16 and overflowing from a gap (between the ribs 28c in the front part 28a of the mouth ring) when the valve body 20 and the valve retainer 26c are opened.

A whole part of the coating body 16 is an approximately bar-like body, and it shows a form in which it is tapered and rounded at a tip and in which a rear end thereof is cut down. In the spring body 22 described above, formed is a tubular part (regulated part) 32 in which formed are, as shown in Fig. 1 and Fig.3, a valve body 20 in a tip part, an approximately spiral elastic part 22a in a central part and a flange-like part 32a at a rear part. The valve body 20 is tabular in a front part 20a, and it has a conical side face part in a rear part 20b and has a bulkhead 20c in a central part.
Employed is a structure in which the conical side face part in the above rear part 20b is brought obliquely into contact with a circular opened inner face of the valve retainer 26c in the front holder 26 and released from it to open and close the ink discharge channel 18.
Further, a space 34 in which the stirring body 14 described above can be inserted and pulled out is provided in the spring body 22. That is, the hollow space 34 is formed in a central part of a cross-sectional direction from the tubular part 32 in a rear part to the rear part 20b of the valve body 20 in a front part through the elastic part 22a, and the stirring body 14 is detachably constituted in the above space 34. In this regard, the stirring member 14 described above is bar-like, and a rear end part 14a is increased in a diameter more than the other parts and formed in a flange form in which a part thereof is notched.

The tubular part (regulated part) 32 comprising a contact part having a smaller inner diameter than an outer diameter of the rear end part 14a of the stirring body 14 described above is molded from a resin integrally with the spring body 22 in a rear end part thereof. This allows the rear end part 14a of the stirring body 14 to be locked to an inside step part 32b of the tubular part 32 to regulate the stirring body 14 so that a front end part thereof is not brought into contact with an inner face of the valve body 20 (bulkhead 20c thereof) in a front end part of the spring body 22.
Also, depressions and projections on an outer circumferential face of the tubular part 32 in a rear end part of the spring body 22 described above are interlocked with depressions and projections on an inner circumferential face of the front holder 26 in a rear end so that the spring body 22 does not come off from the front holder 26. Further, a rear end of the tubular part 32 is increased in a diameter toward an outside to form the flange-like part 32a, and when it is mounted in the front holder 26, the flange-like 32a is brought into contact with a rear end 26a of the front holder 26 so that the tubular part does not get any more thereinto. Further, when the above spring body 22 is mounted, screwed and fixed in the front end part 10b in the barrel 10 in a state in which the spring body 22 is mounted in the front holder 26, the flange-like part 32a described above is positioned by the rib 22a on an inner circumferential face of the ink tank 12. That is, the above flange-like part 32a is interposed by the front holder 26 from a front side and the rib 12a from a rear side respectively to allow a position of a rear end part thereof in the barrel 10 to be fixed, and the valve body 20 provided in a front end part thereof is provided movably to the front and rear directions.
In the elastic part 22a of the spring body 22 described above, two linear bodies are, as shown in Fig. 3, molded in an approximately spiral form along four faces showing an approximately rectangular form in the cross-section, and the linear body along opposite two faces is turned almost vertically to a barrel direction. Also, the linear body along the other opposite two faces is formed obliquely to the barrel direction. Further, the valve body 20 described above is molded from a resin integrally with a front end part of the spring body 22.

A cap 24 is detachably fitted externally to the front holder 26 covering the mouth ring 28 and the coating body 16 at a front end of the writing instrument described above. The cap 24 shows an approximately bowl form in which a front end is closed and in which a circumference of a central part in a barrel direction is dented, and a rear end part thereof is brought into contact with a flange 26b of the front holder 26. A clip 24a is provided in an outside part thereof so that a pocket of the user can be nipped with the clip 24a to fix the writing instrument. Further, a concave part 24b is formed cyclically in an outside face part of the cap 24 so that the cap is nipped with a finger tip of the user and readily detached from the barrel 10.

The respective members other than the stirring member 14 in the writing instrument of the above embodiment are suitably constituted only by resin materials in terms of residues after burning treatment. In the present embodiment, the coating body 16 is a fiber bundle, a continuous foamed body, a molded article or the like which comprises polyethylene terephthalate (PET). Also, the barrel 10, the front holder 26, the mouth ring 28 and the cap 24 each described above comprise polypropylene (PP). Further, the spring body 22 comprises polyacetal (POM), and the sponge 30 comprises polyurethane. The respective parts are formed by injection molding, and since the barrel 10 and the front holder 26 can be formed by injection molding at a good accuracy, an accuracy of an opposite screw-connected portion is enhanced. Further, burrs are less liable to be generated at the rear end part of 10a, and the appearance quality is improved.

According to the marking pen (writing instrument) related to the present embodiment, the coating body 16 turns downward in storing the writing instrument, and the valve body 20 at a front end of the spring body 22 is adhered closely to the valve retainer 26c of the front holder 26 by an elastic force of the elastic part 22a toward a front side to shut down the coating liquid discharge channel 18 (state shown in Fig. 1). On the other hand, an ink having a settling property is stirred in use. The stirring member 14 moves forward and backward in the tank 12 by shaking the writing instrument to stir the ink having a settling property. In this case, the rear end part 14a of the stirring member 14 is increased in a diameter in a flange form, and therefore it gets stuck, as shown in Fig.2 and Fig. 3, on an inside step part 32b of the tubular part 32 at a rear end of the front holder 26 and does not move any more to a valve body 20 side, so that the valve body 20 is prevented from being opened by impact.
The user pushes the coating body 16 against a desk and the like to allow the coating body 16 to go back against an elastic force of the spring body 22. This allows the valve body 20 at a rear end of the coating body and a front end of the spring body 22 to separate from the valve retainer 26c of the front holder 26 and allows the coating liquid discharge channel 18 to be opened, and the ink is supplied to the coating body 16 via the sponge 30. The rear end part 14a of the stirring body 14 is a flange-like part in which a part thereof is notched, and therefore even when the above stirring body 14 is put in the space 34 of the spring body 22, the coating liquid discharge channel 18 into the space 34 is secured by the notches of the above rear end part 14a to make smooth coating or writing possible without interrupting discharge of the coating liquid.
According to the valve-equipped marking pen (writing instrument) related to the above embodiment, the stirring member 14 is formed in a bar shape in which a rear end part thereof is increased in a diameter more than the other part; the space 34 in which the stirring member 14 can be inserted and pulled out is provided in the spring body 22 described above; and provided is a regulated part in which the tubular inside step part 32b locks a rear end part of the stirring member 14 in the barrel 10 to regulate the stirring member 14 so that it is not brought into contact with a front end part of the spring body 22.

Accordingly, prepared is the writing instrument in which the stirring member 14 does not hit against an inside of the spring body 22 at a front end thereof when the writing instrument is shaken to stir the coating liquid by the stirring member 14, and therefore the valve body 20 does not act to open the valve; leaking and blowing of the ink are not brought about; a discharge property of the ink is good; the ink is readily redispersed by a simple stirring operation by the stirring member 14 even when the masking agent settles down after the passage of time; and it is excellent in a masking property and stability. Also, since the valve body 20 is molded from the resin integrally with the spring body 22 at a front end part thereof, the parts can be reduced in numbers, and molding and handling are facilitated. Further, if the tubular part (regulated part) 32 comprising a contact part having a smaller inner diameter than an outer diameter of the rear end part of the stirring member 14 described above is molded from the resin integrally with the spring body 22 at a rear end part thereof, it does not have to be mounted separately, and molding and handling are further facilitated.

Also, a whole part of the marking pen (writing instrument) including the stirring member 14 is constituted from the resin, and therefore air pollution after burning treatment in disposition is reduced as compared with conventional marking pens (writing instruments) having a metal-made stirring member. Further, the residue amount after burning treatment is reduced, and therefore the environmental load can be further reduced.

The marking pen (writing instrument) constituted in the above manner shall not be restricted to the embodiments described above as long as it is filled with the aqueous marking ink composition of the present invention, and the writing instrument structure, the ink discharge mechanism, the structure of the stirring member and the like can be varied in various manners. If a structure in which the stirring member mounted in the writing instrument hits against an inner wall in stirring is employed, the writing instrument sounds in an inside in stirring, and therefore a structure in which stirring can readily be confirmed can be obtained.

### EXAMPLES

Next, the present invention shall be explained in further details with reference to examples and comparative examples, but the present invention shall not be restricted to the examples shown below.

### Examples 1 to 15 and Comparative Examples 1 to 11

Aqueous marking ink compositions (total amount: 100 %) were prepared by an ordinary method based on recipes shown in the following Table 1 and Table 2.
The respective viscosities of the resulting respective aqueous marking ink compositions at the respective shear rates of 3.83 to 383 sec⁻¹ at 25°C were measured by the following measuring method.
Further, the respective aqueous marking ink compositions obtained were used and filled into a marking pen having the following constitution to evaluate a masking property (non-absorbing black surface), a fixing property (metal surface), a drawn line state (metal surface stained with oil), a writing performance (discharge), a restirring property (ball moving frequency), a writing property in writing again and again (pen tip upward repetition) and a downward storing property (pen feed clogging).
The results thereof are shown in the following Table 1 and Table 2.

### Method for measuring a viscosity of aqueous marking ink composition at 25°C:

The aqueous marking ink composition obtained was sufficiently stirred to measure a viscosity thereof at the respective shear rates (shear rates of 7 stages of 3.83 to 383 sec⁻¹, 25°C) by means of a TV-20L type viscometer (cone plate type) manufactured by Tokimec Inc. using a standard rotor (1°34' X R24).

### Constitution of marking pen:

A marking pen having the following constitution was used as the marking pen:
Barrel: PWX manufactured by Mitsubishi Pencil Company, Ltd.
Pen tip: diameter: 5 mm, PET fiber bundle feed of an artillery shell form
Ink: aqueous marking ink compositions 4 ml prepared in the respective examples and comparative examples
Ink discharge structure: valve mechanism
Stirring member: form: bar-like, polyacetal-made, size: φ5 mm, specific gravity: 1.4

### Method for evaluating a masking property (non-absorbing black surface):

The marking pens filled with the respective aqueous marking ink compositions prepared in the respective examples and comparative examples were used for writing round lines on a masking rate-measuring paper prescribed in JIS K 5400-1990 and JIS K 5600-1999, and a masking property thereof on a non-absorbing black surface was sensorially 0evaluated with naked eyes according to the following criteria:

### Evaluation criteria:

ⓞ: completely mask a base
O: a base is slightly seen
Δ: a base is almost seen
×: a base is seen

### Method for evaluating a fixing property (metal surface):

The marking pens filled with the aqueous marking ink compositions prepared in the respective examples and comparative examples were wiped up by ethanol and then used for writing round lines on an iron plate coated with a lubricant (Daphne Magplus TH10, manufactured by Idemitsu Kosan Co., Ltd.) under an environment of 25°C, and a fixing property thereof onto the metal surface was evaluated under an environment of 25°C according to the following criteria:

### Evaluation criteria:

ⓞ: rubbed 50 times or more by a swab
O: rubbed 20 to 50 times by a swab
Δ: rubbed 10 to 20 times by a swab
×: rubbed 0 to 10 times by a swab

### Method for evaluating a drawn line state (metal surface stained with oil):

The marking pens filled with the aqueous marking ink compositions prepared in the respective examples and comparative examples were wiped up by ethanol and then used for writing round lines on an iron plate coated with a lubricant (Daphne Magplus TH10, manufactured by Idemitsu Kosan Co., Ltd.) under an environment of 25°C, and a drawn line state thereof on the metal surface was sensorially evaluated according to the following criteria:

### Evaluation criteria:

ⓞ: good state
O: slight repelling or blurring
Δ: repelling or blurring
×: repelling or blurring observed to a large extent

### Method for evaluating a writing performance (discharge):

The marking pens filled with the aqueous marking ink compositions prepared in the respective examples and comparative examples were used for writing round lines on an iron plate wiped up by ethanol under an environment of 25°C, and a writing performance (discharge) thereof was sensorially evaluated according to the following criteria:

### Evaluation criteria:

ⓞ: optimum discharge amount
O: slightly large or small
Δ: large or small
X: apparently large or small

### Method for evaluating a restirring property:

The marking pens filled with the respective inks were used to count a ball moving frequency observed when the pens were stored at 40°C for 2 weeks with the caps being turned upward, and it was evaluated according to the following criteria:

### Evaluation criteria:

ⓞ: 1 to 5 times
O: 6 to 10 times
Δ: 11 to 20 times
×: 21 times or more

### Method for evaluating a writing performance (discharge):

The marking pens filled with the aqueous marking ink compositions prepared in the respective examples and comparative examples were used for writing round lines on an iron plate wiped up by ethanol under an environment of 25°C, and a writing performance (discharge) thereof was sensorially evaluated according to the following criteria:

### Evaluation criteria:

ⓞ: optimum discharge amount
O: slightly large or small
Δ: large or small
×: apparently large or small

### Method for evaluating a writing property in writing again and again:

The marking pens filled with the respective inks were stored at room temperature with the caps being turned upward to evaluate a masking property (masking property observed when written on an iron plate wiped up by ethanol) of lines written every day and repeat the evaluation for a week, and the writing property in writing again and again was sensorially (visually) evaluated after a week according to the following criteria:

### Evaluation criteria:

ⓞ: almost equal to initial masking
O: slightly reduced in masking as compared with initial masking
Δ: reduced in masking as compared with initial masking
×: masking power is apparently short as compared with initial masking

### Method for evaluating a downward storing property:

The marking pens filled with the respective inks were stored at 40°C for 2 weeks with the pens being turned downward and then used for writing on an iron plate wiped up by ethanol, and the downward storing property was evaluated according to the following criteria:

### Evaluation criteria:

ⓞ: the same level as in initial writing
O: starving observed in quickly writing
Δ: slight starving observed
×: inferior writing

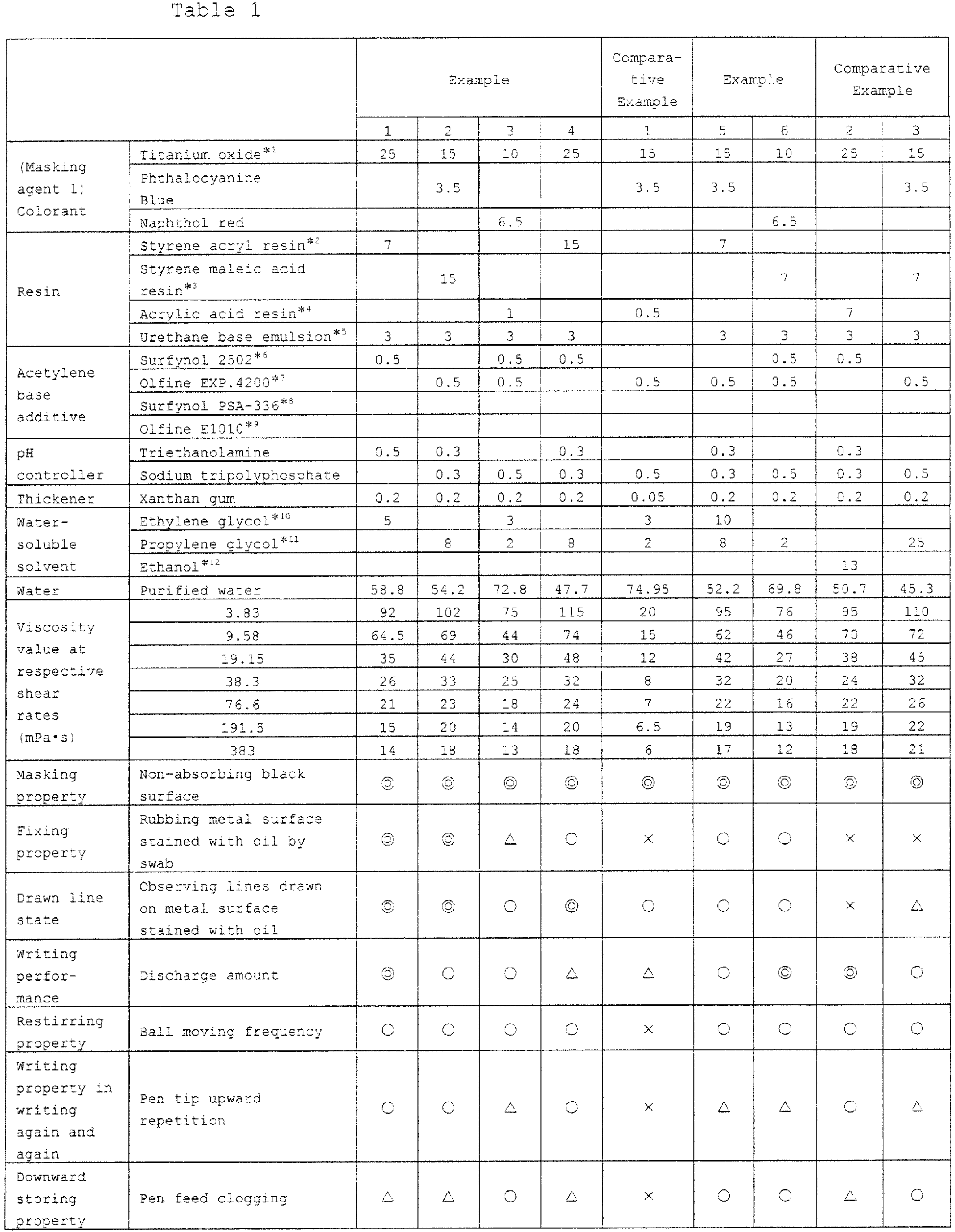

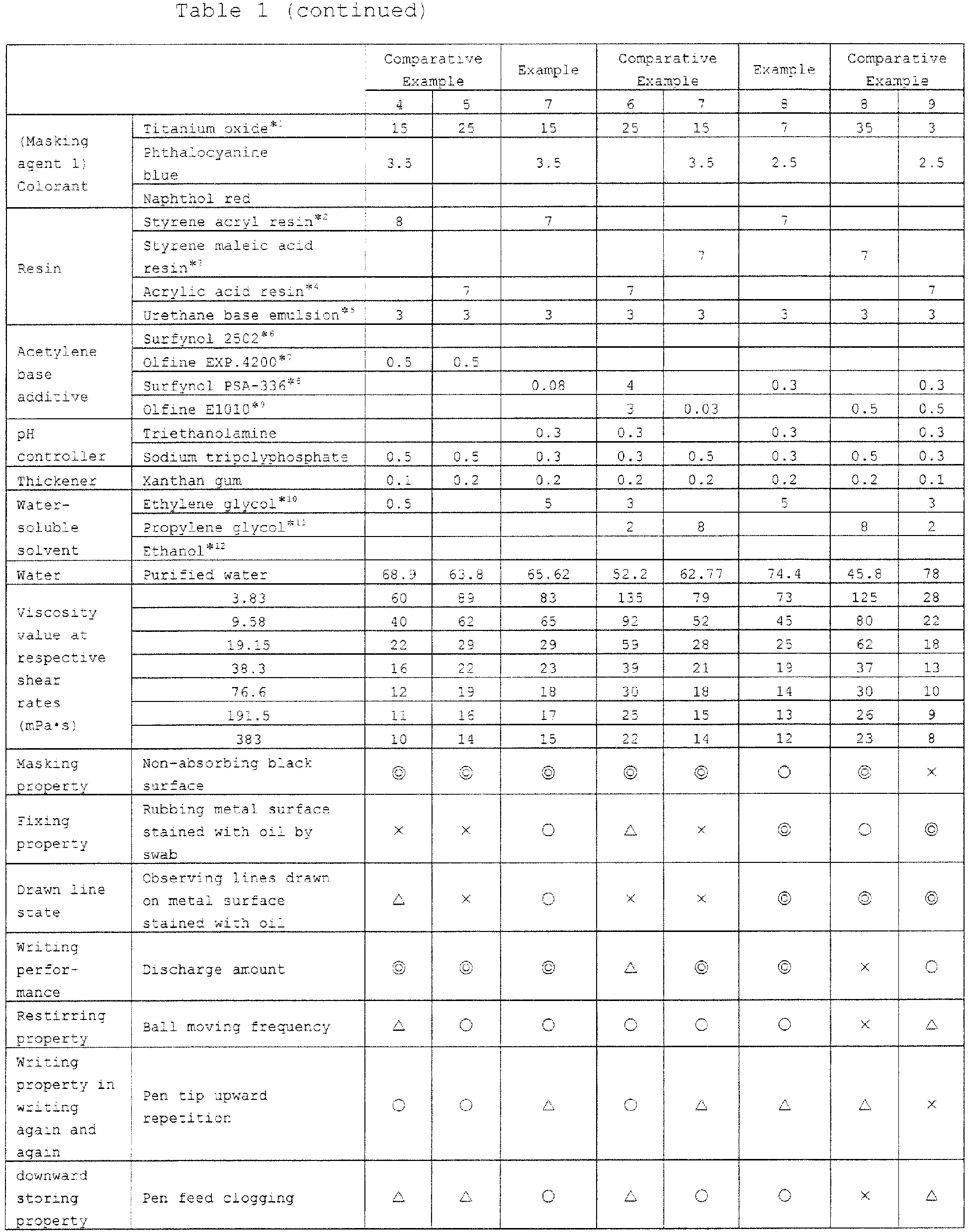

**Table 2**

| | | Example | | | | | | | Comparative Example | |
|---|---|---|---|---|---|---|---|---|---|---|
| | | 9 | 10 | 11 | 12 | 13 | 14 | 15 | 10 | 11 |
| Colorant (Masking agent 1) | Titanium oxide^{*-} | 25 | 20 | 10 | 25 | 28 | 5 | 30 | 31 | 4 |
| Masking agent 2 | Hollow resin particle^{*13} | 5 | 14 | 10 | | 18 | 1 | 21 | 18 | 3 |
| | Resin particle^{*-4} | | | | 5 | | | | | |
| Colorant | Phthalocyanine olue | | 3.5 | | | | | | | |
| | Naphthol red | | | 6.5 | | | | | | |
| Resin | Styrene acryl resin^{*2} | 7 | | | 16 | 7 | 7 | 7 | 7 | 7 |
| | Styrene maleic acid resin^{*} | | 15 | | | | | | | |
| | Acrylic acid resin^{*4} | | | 2 | | | | | | |
| | Urethane base emulsion^{*} | 3 | 3 | 3 | 3 | 3 | 3 | 3 | 3 | 3 |
| Acetylene base additive | Surfynol 2502^{*} | 0.5 | | 0.5 | 0.5 | 0.5 | 0.5 | 0.5 | 0.5 | 0.5 |
| | Olfine EXP.4200^{*} | | 0.5 | 0.5 | | | | | | |
| pH controler | Triethanolamine | 0.5 | 0.3 | | 0.3 | 0.3 | 0.3 | 0.5 | 0.5 | 0.5 |
| | Sodium tripolyphosphate | | 0.3 | 0.5 | 0.3 | | | | | |
| Thickener | Xanthan gum | 0.2 | 0.15 | 0.2 | 0.15 | 0.2 | 0.2 | 0.2 | 0.2 | 0.2 |
| Water-soluble solvent | Ethylene glycol^{*-0} | 5 | | 3 | | 5 | 5 | 5 | 5 | 5 |
| | Propylene glycol^{*} | | 8 | 2 | 8 | | | | | |
| Water | Purified water | 53.8 | 35.25 | 61.8 | 41.75 | 38 | 78 | 32.8 | 34.8 | 76.8 |
| Viscosity value at respective shear rates (mPa·s) | 3.83 | 94 | 105 | 90 | 98 | 150 | 45 | 170 | 165 | 56 |
| | 9.58 | 67 | 72 | 64 | 68 | 110 | 32 | 120 | 115 | 39 |
| | 19.15 | 35 | 46 | 32 | 39 | 73 | 20 | 82 | 74 | 26 |
| | 38.3 | 27 | 34 | 25 | 30 | 42 | 15 | 52 | 48 | 17 |
| | 76.6 | 22 | 24 | 20 | 22 | 35 | 11 | 40 | 38 | 12 |
| | 191.5 | 16 | 20 | 18 | 18 | 30 | 8 | 27 | 28 | 11 |
| | 383 | 15 | 18 | 16 | 16 | 27 | 7 | 24 | 26 | 10 |
| Masking Property | Non-absorbing black surface | ⓞ | ⓞ | ⓞ | ⓞ | ⓞ | Δ | ⓞ | ⓞ | × |
| Fixing Property | Rubbing metal surface stained with oil by swab | ⓞ | ⓞ | ○ | ⓞ | ○ | ⓞ | Δ | Δ | ⓞ |
| Drawn line State | Observing lines drawn on metal surface stained with oil | ⓞ | ⓞ | ⓞ | ⓞ | ⓞ | ○ | ⓞ | ⓞ | ○ |
| Writing performance | Discharge amount | ⓞ | ○ | ⓞ | ⓞ | Δ | Δ | Δ | × | Δ |
| Restirring Property | Ball moving frequency | ○ | ⓞ | ⓞ | ○ | ○ | Δ | ○ | Δ | ○ |
| Writing property in writing again and again | Pen tip upward repetition | ⓞ | ⓞ | ⓞ | ○ | ⓞ | Δ | ○ | Δ | Δ |
| Downward storing property | Per feed clogging | ⓞ | ⓞ | ⓞ | ○ | ○ | Δ | Δ | Δ | ○ |

The terms *1 to *14 in Table 1 to Table 2 described above show the followings.
*1: CR-50 (average particle diameter: 250 nm, specific gravity: 4.2, manufactured by Ishihara Sangyo Co., Ltd.)
*2: JONCRYL J678 (manufactured by BASF A.G.)
*3: SMA1440 (manufactured by Kawahara Petrochemical Co., Ltd.)
*4: JONCRYL 6102B (manufactured by BASF A.G.)
*5: WBR-016U (manufactured by Taisei Fine Chemical Co., Ltd.)
*6: EO (5 mole) + PO (2 mole) adduct of 2,4,7,9-tetramethyl-5-decyne-4,7-diol
*7: blended product of acetylenediol
*8: polyethoxylate of 2,4,7,9-tetramethyl-5-decyne-4,7-diol
*9: EO (10 mole) adduct of 2,4,7,9-tetramethyl-5-decyne-4,7-diol
*10: a vapor pressure at 25°C is 5 mmHg or less (1 mmHg or less)
*11: a vapor pressure at 25°C is 5 mmHg or less (0.5 mmHg or less)
*12: a vapor pressure at 25°C is 5 mm Hg or more (59 mm Hg)
*13: OP-84J (styrene acryl resin, solid content: 42.5 %, average particle diameter: 1000 nm, specific gravity: 1.1, manufacture by Rohm & Haas Company)
*14: S6 (melamine resin, average particle diameter: 400 nm, specific gravity: 1.5, manufacture by Nippon Shokubai Co., Ltd.)

As apparent from the results shown in Table 1 to Table 2 described above, it has become confirmed that the ink compositions prepared in Examples 1 to 15 each falling in the scope of the present invention are excellent in a masking property, a fixing property, a drawn line state and a writing performance as compared with the ink compositions prepared in Comparative Examples 1 to 11 each falling outside the scope of the present invention.
All of Examples 1 to 8 and Examples 9 to 15 fall in the scope of the present invention, and Examples 9 to 15 are an embodiment in which titanium oxide is used in combination with the second masking agent. Examples 9, 10 and 11 are based on Examples 1, 3 and 4 respectively, and the ink compositions in the above cases are further excellent in a restirring property, a writing property in writing again and again and a downward storing property.
In contrast with this, observing individually the comparative examples, the resin content was small, and the line fixing property was inferior in evaluation in Comparative Example 1. In Comparative Example 2, a water-soluble solvent having a vapor pressure of exceeding 5 mmHg at 25°C was contained in the solvent in excess of 20 %, and therefore the ink composition was dried before the lines were completely fixed on a metal surface and inferior in evaluation of a line fixing property. In Comparative Examples 3 and 4, a content of the water-soluble solvent having the specific physical properties of the present invention fell outside the scope; in Comparative Example 3, the water-soluble solvent was increased, and therefore the drying time was delayed as compared with that in Comparative Example 2, but evaluation of the line fixing property was also inferior; in Comparative Example 4, a content of the water-soluble solvent was small, and therefore evaluation of the drawn line state and the line fixing property was inferior. In Comparative Example 5, the water-soluble solvent having the specific physical properties of the present invention was not contained, and therefore evaluation of the drawn line state and the line fixing property was inferior as well.
Also, in Comparative Examples 6 and 7, the contents of the additives of the present invention fell outside the ranges of the present invention; since the additive was excessive in Comparative Example 6, the drawn lines were blurred, and evaluation of the line fixing property was inferior; since in Comparative Example 7, a content of the additive was small, the drawn lines were increased in repelling, and evaluation of the line fixing property was inferior as well.
Further, Comparative Examples 8 to 11 are cases in which a content of titanium oxide deviates from the ranges of the present invention, and it has been found that the writing performance (discharge amount) is inferior when a content of titanium oxide is larger and that on the other hand, the masking property is deteriorated when a content of titanium oxide is smaller.

### Industrial Applicability

Obtained is an aqueous marking ink composition for industrial use which has a suitable and good wetting property to a non-absorbing surface of metals, resins and the like stained with oils such as a cutting oil and lubricant and can write smoothly thereon at a low viscosity without being repelled and which can provide drawn lines having a high masking property and a high fixing property.

### List of Reference Numerals

- 10: Barrel
- 12: Tank
- 14: Stirring member
- 16: Pen body (coating body)
- 18: Ink discharge channel
- 20: Valve body
- 24: Cap
- 26: Front holder
- 28: Mouth ring
- 30: Sponge

## Claims

1. An aqueous marking ink composition containing at least 1 to 20 % by mass of a resin which is water-soluble and has a hydrophobic part in a molecule thereof, a colorant containing at least 5 to 30 % by mass of titanium oxide, 0.05 to 2 % by mass of at least one selected from acetylene glycols, acetylene alcohols or derivatives thereof, 1 to 20 % by mass of a water-soluble solvent having a vapor pressure of 5 mmHg or less at 25°C and water.

2. The aqueous marking ink composition as described in claim 1, wherein it further contains, in addition to titanium oxide described above, a second masking agent having a specific gravity which is different from that of titanium oxide described above; the second masking agent is glass particles, metal particles, resin particles, hollow resin particles, calcium carbonate particles, boron nitride particles, wax particles and composite particles thereof or a dispersion of the above particles; a particle diameter of the second masking agent is 40 nm to 50000 nm; and a content of the second masking agent is 2 to 20 % by mass in terms of a solid content.

3. The aqueous marking ink composition as described in claim 1 or 2, wherein values of a viscosity of the aqueous marking ink composition which are measured at 25°C by means of an ELD type rotational viscometer at the following shear rates fall respectively in the following ranges:
| shear rate (s⁻¹) | viscosity (mPa·s) |
|---|---|
| 9.58 | 40 to 75 |
| 19.15 | 20 to 50 |
| 38.3 | 15 to 35 |
| 191.5 | 12 to 22 |
| 383 | 10 to 18 |

4. The aqueous marking ink composition as described in any one of claims 1 to 3, wherein the resin which is water-soluble and has a hydrophobic part in a molecule thereof is at least one selected from water-soluble acryl resins, water-soluble maleic acid resins, water-soluble styrene resins, water-soluble styrene-acryl resins, water-soluble styrene-maleic acid resins, polyvinylpyrrolidone, polyvinyl alcohol, water-soluble ester-acryl resins, ethylene-maleic acid copolymers, polyethylene oxide, water-soluble urethane resins, acryl base emulsions, vinyl acetate base emulsions, urethane base emulsions, styrene-acrylcnitrile emulsions, styrene-butadiene emulsions and silicone emulsions.

5. The aqueous marking ink composition as described in any one of claims 1 to 4, wherein at least one selected from acetylene glycols, acetylene alcohols or derivatives thereof is a compound represented by the following Formulas (I) to (IV) : 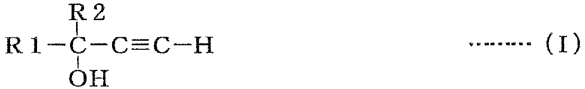 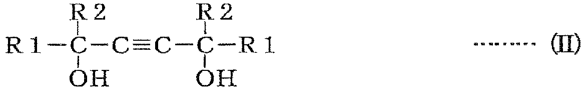 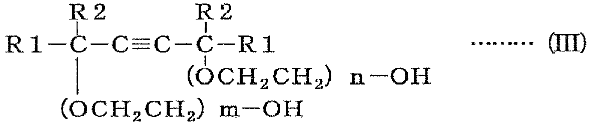 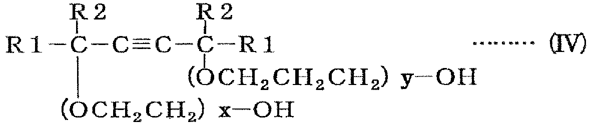 (R1 and R2 in Formulas (I) to (IV) described above each are a linear or branched alkyl group having 1 to 8 carbon atoms, and m, n, x and y are integers of 1 to 100).

6. The aqueous marking ink composition as described in any one of claims 1 to 5, wherein the water-soluble solvent having a vapor pressure of 5 mmHg or less at 25°C is at least one selected from 2-methyl-1-butanol, 3-methyl-2-butanol, benzyl alcohol, cyclohexanol, propylene glycol, ethylene glycol, diethylene glycol, trimethylene glycol, 1,2-butanediol, 1,3-butanediol, tetramethylene glycol, 2,3-butanediol, pentamethylene glycol, 2-butene-1,4-diol, hexylene glycol, octylene glycol, glycerin, hexaglycerol, 1,2,6-hexanetriol, butyl cellosolve, isoamyl cellosolve, hexyl cellosolve, phenyl cellosolve, furfuryl alcohol, tetrahydrofurfuryl alcohol, methyl carbitol, ethyl carbitol, butyl carbitol, triethylene glycol, triethylene glycol monomethyl ether, tetraethylene glycol, polyethylene glycol, dipropylene glycol, dipropylene glycol monomethyl ether, dipropylene glycol monoethyl ether, polypropylene glycol, diacetone alcohol, methyl cellosolve acetate, ethyl cellosolve acetate, carbitol acetate and butyl carbitol acetate.

7. The aqueous marking ink composition as described in any one of claims 1 to 6, wherein it is filled into a valve type writing instrument having a stirring member.
